**Europäisches Patentamt**

**European Patent Office**

**Office européen des brevets**

(19)

(11) Publication number: **0 081 023**

**A1**

(12) # EUROPEAN PATENT APPLICATION

(21) Application number: **81305821.1**

(22) Date of filing: **09.12.81**

(51) Int. Cl.³: **G 11 B 23/02**

(43) Date of publication of application:
**15.06.83 Bulletin 83/24**

(84) Designated Contracting States:
**AT BE CH DE FR GB IT LI NL SE**

(71) Applicant: **Allison, James**
**28 Hall Street**
**Hamilton Lanarkshire Scotland(GB)**

(72) Inventor: **Allison, James**
**28 Hall Street**
**Hamilton Lanarkshire Scotland(GB)**

(74) Representative: **Huskisson, Frank Mackie et al,**
**Fitzpatricks 48 St. Vincent Street**
**Glasgow, G2 5TT Scotland(GB)**

(54) **Device for storing and dispensing magnetic tape cassettes.**

(57) A device for storing and dispensing magnetic tape cassettes which is suitable for use in a motor vehicle comprises a casing (1) which is rectangular in plan view and in cross section (and assumed for convenience to be horizontal), a platform (3) spaced from the rear end (4) of the casing and dividing a front portion thereof into upper and lower compartments (5,6); a drawer (2) slidable within the casing (1) and having a bottom aperture; and a plurality of resiliently depressable pusher member (13,14) and stop members (15,17) in each of said compartments (5,6) the pusher members (13,14) being carried by the drawer (2), and the stop members (15,17) being carried by the casing (1) and by the platform (3); said members (13) in the upper compartment (5) being adapted and arranged to push cassettes rearwardly along the platform (3) during closing movement of the drawer (2) until they drop into the lower compartment (6), and said stop members (15) in the upper compartment (5) preventing movement of cassettes with the drawer (2) during opening movement of the drawer (2); and said pusher members (14) in the lower compartment (6) being adapted and arranged to move cassettes forwardly during opening movement of the drawer (2) until they are ejected through the open front end of the lower compartment, and said stop members (17) in the lower compartment (6) preventing movement of cassettes with the drawer (2) during closing movement of the drawer (2).

Fig.1.

Fig.4.

Croydon Printing Company Ltd.

Device for storing and dispensing magnetic tape cassettes

This invention relates to a device for storing and dispensing magnetic tape cassettes, especially but not exclusively for use in a motor vehicle.

According to the present invention there is provided a device for storing and dispensing magnetic tape cassettes, said device comprising a casing divided into a plurality of superimposed communicating compartments and characterised in that each compartment is provided with a plurality of resiliently depressable pusher members and stop members for gripping cassettes such that insertion of a series of cassettes causes each cassette in turn to be gripped by the pusher and stop member and subsequently released and advanced through the compartments by pressure applied during the insertion of a subsequent cassette.

Preferably the device includes a drawer slidable within the casing which carries pusher members.

Preferably also the pusher members in an upper compartment are adapted and arranged to push cassettes rearwardly through the compartment during closing movement of the drawer until they drop into a lower compartment, whereas stop members in the upper compartment prevent movement of cassettes with the drawer during opening movement of the drawer; and pusher members in the lower compartment are adapted and arranged to move cassettes forwardly during opening movement of the drawer until they are ejected through the open front end of the lower compartment, whereas stop members in the lower compartment prevent movement of cassettes with the drawer during closing movement of the drawer.

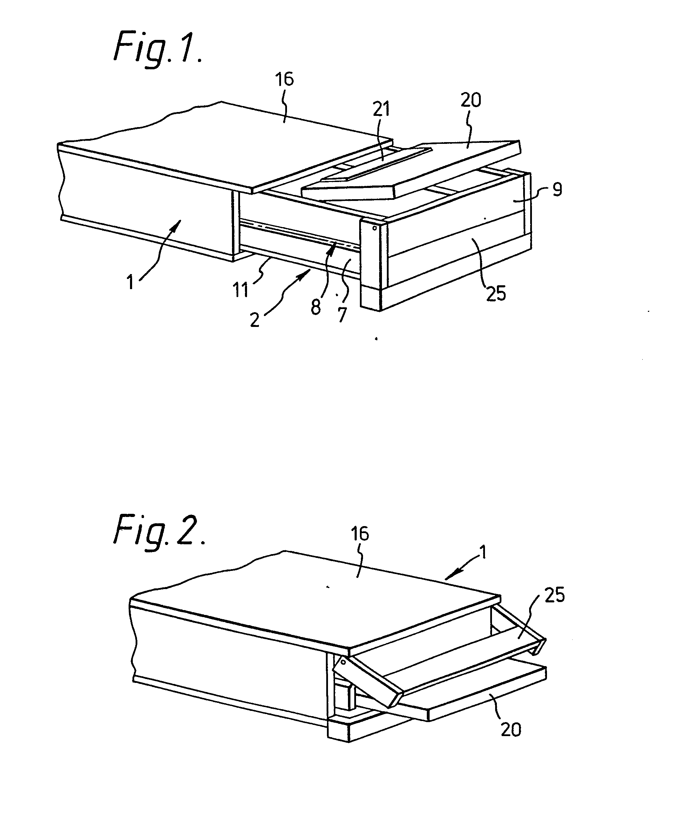

An embodiment of the invention will now be described, by way of example, with reference to the accompanying drawing, in which:-   Fig 1 is a fragmentary perspective view of a device according to the present invention and showing the drawer open and receiving a cassette;

Fig. 2 is a view corresponding to Fig. 1 and showing the drawer closed and a cassette ejected;

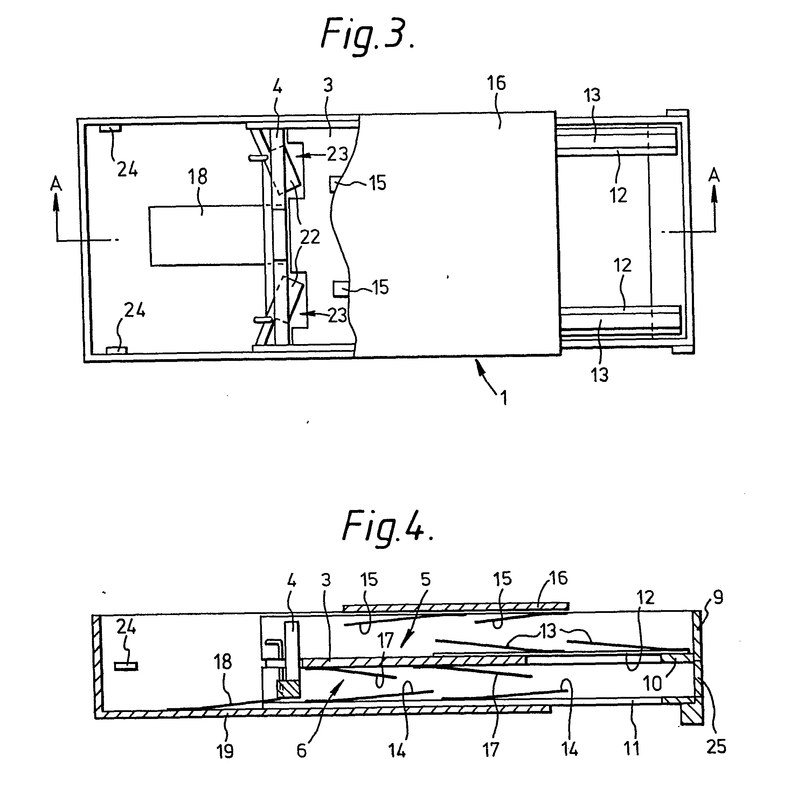

Fig. 3 is a plan view with the drawer open, and with a part of the top wall of the casing removed;  and

Fig. 4 is a section on the line A-A of Fig. 3.

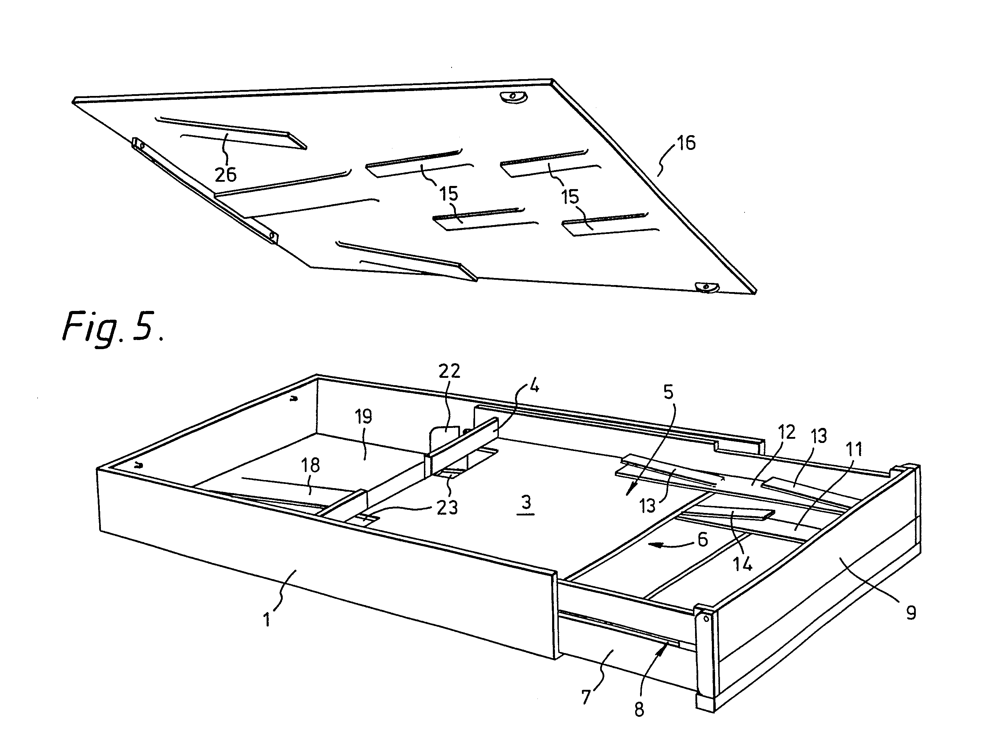

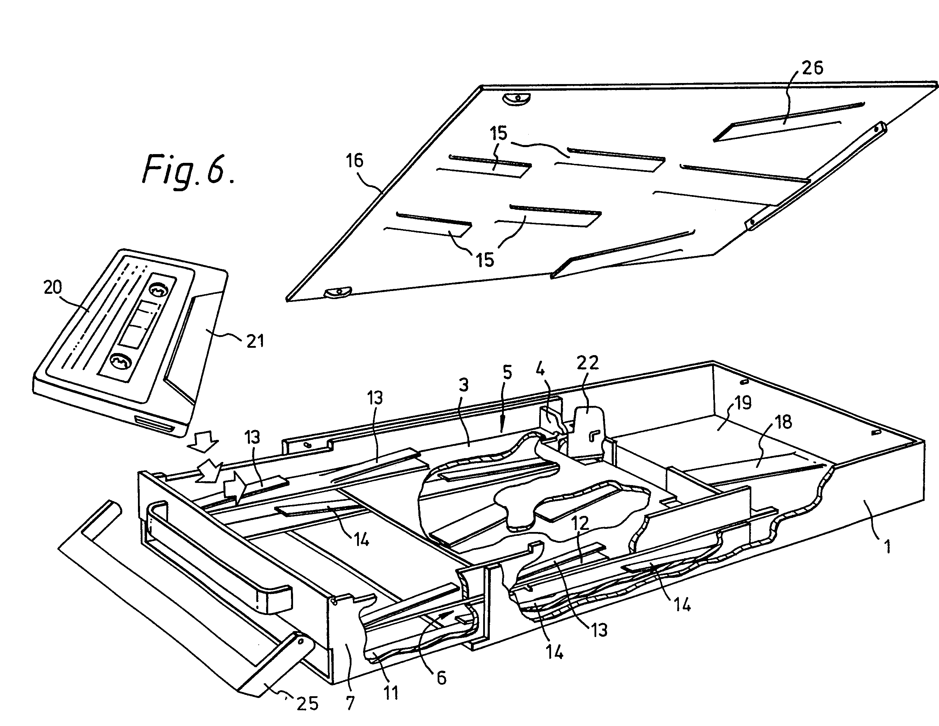

Figs. 5 and 6 are exploded views of a preferred embodiment of the invention.

Referring to the drawing, a device for storing and dispensing cassettes consists generally of a casing 1 which is rectangular in plan view and in cross section, and a drawer 2 slidable within the casing 1.

The casing 1 has a platform 3 which, when the drawer is closed, is spaced from the rear end wall 4 of the drawer, and divides a front portion of the casing into upper and lower compartments 5, 6.  Each side wall 7 of the drawer has a slot 8 so that the drawer can slide relative to the platform 3.  The drawer has a front wall 9 which closes the front end of the upper chamber 5 only, and the front wall 9 has a ledge 10 aligned with the platform 3.  The base of the drawer consists of opposed side runners 11 so that the bottom of the drawer is mainly open.

The drawer 2 has opposed strips 12 which are secured only at their front ends to the ledge 10 and project over and along the platform 3.  Each strip carries two pusher members 13 which are spaced one in front of the other and are secured at their front ends to the strips 12.  The members 13 are slightly inclined upwards and rearwardly and are made of strips of flexibly resilient plastics material or spring steel.  Each runner 11 of the drawer carries two similar pusher members 14 which are inclined upwardly and forwardly.

Two pair  of laterally spaced stop members 15 are provided on the underface of the top wall 16 of the casing, one pair being spaced forwardly of the other pair.  Each stop member 15 is made of strips of the same material as the pusher members 13,14 and is incluned downwardly and rearwardly.  Two pair of similar stop members 17 are provided on the underface of the platform 3 and are inclined downwardly and forwardly.  A further stop member 18 is provided on the upper face of the bottom wall 19 of the casing and is inclined upwardly and forwardly.

The device in the present embodiment has a capacity for five cassettes arranged two on the platform 3, and three in the lower compartment 6, one behind the other, and the device is filled as follows.

The first cassette 20 (Fig. 1) is inserted into the open drawer so that it lies on top of the ledge 10 and the pusher members 13, the cassette being inserted with its open end leading, said end having an enlarged portion 21. The drawer is closed so that the cassette is located in the upper compartment 5 and mainly over the platform 3, and the free ends of the front stop members 15 now lie immediately in front of the enlarged portion 21 of the cassette. The drawer is opened, and the said stop members 15 hold the cassette in position so that it does not move out with the drawer. The second cassette is inserted into the drawer, and the drawer is closed. This causes the second cassette to push the first cassette rearwards along the platform on to the rear pusher members 13, and the free ends of the front and rear stop members 15 lie respectively in front of the enlarged portions of the front and rear cassettes.

When the drawer is again opened, the stop members 15 hold the cassettes in position, and a third cassette is inserted. When the drawer is closed, the first cassette is pushed off the platform 3 and drops on to the rear pusher members 14 on the runners 11 of the drawer.

When the drawer is opened, it carries the first cassette into the lower chamber 6 so that it lies immediately in front of the free end of the stop member 18. Thus, when the drawer is closed with a fourth cassette, the stop member 18 prevents the first cassette moving rearwards with the drawer, and a second cassette is pushed off the platform 3 and drops onto the rear pusher members 14 on the runners 11 of the drawer. The drawer is again opened, and this causes the second cassette to push the first cassette forwards along the runners onto to the front push members 14 and with its enlarged portion 21 immediately in front of the rear stop member 17.

When the device is fully loaded, the first cassette now lies on top of the front pusher members 14 and with its enlarged portion in front of the stop members 17. If the drawer is now opened, the first cassette is moved forwards to a position in front of the stop member 17, so that, when the drawer is closed, the first cassette is held against rearward movement and projects through the open front end of the lower compartment, so that it can be easily withdrawn by hand and be inserted in a casette player.

Those pusher members 13 and 14 which have not been described in action above, would act to push a cassette which was not immediately followed by another cassette, as in the case of the last cassette, if the device were not refilled.

The rear wall 4 of the drawer contains two laterally spaced pivotal levers 22 level with the platform 3. The tails of the levers 22 project into the slots 8 in the side walls 7 of the drawer, and, immediately prior to the drawer being fully opened, they abut stops which project into the slots 8, and this causes the levers to pivot so that their noses project forwardly out of the plane of the rear wall 4 and into recesses 23 in the rear end of the platform 3. The noses of the levers thus support the rear of each cassette as it moves across the rear end of the platform and the space between the latter and the rear wall 4 of the drawer. As the drawer reaches its fully shut position, the tails of the levers 22 abut stops 24 at the rear of the casing and the levers are pivoted clear of the cassette so that the latter drops through said space whilst remaining substantially horizontal.

The front open end of the lower compartment is preferably closed by a pivotal flap 25, as shown.

The device above described is especially suitable for use in a motor vehicle, because cassettes can be inserted and withdrawn using only one hand. Moreover, they are neatly stored and protected from damage and dust, and they can be placed in a desired order for use on a long journey.

The device need not be located in a horizontal position, and, if it is not, leaf springs/26 are provided on the inner face of the wall 16 of the casing for urging the cassettes through the space between the end of the platform and the inner end wall of the drawer.

The device may be fixed in any convenient position in a vehicle by means of a bracket, clips, or straps, for example. In the case of a clip, this may be a U-shaped spring clip which engages in grooves or eyes in the side walls of the casing.

The device may form a unit with a portable cassette player or may be removably attached to it by straps or clips, or they may be located together in a leather or plastics holder.

It is to be understood that the width of the drawer is only slightly greater than the width of a cassette, so that the cassettes cannot become askew in the drawer and jam.

It is also to be understood that the device can be dimensioned to accept more or less than five cassettes, as desired.

Claims:

1.    A device for storing and dispensing magnetic tape
cassettes comprising a casing divided into a plurality of
superimposed communicating compartments and characterised
in that each compartment is provided with a plurality of
resiliently depressable pusher members and stop members for
gripping cassettes such that insertion of a series of
cassettes causes each cassette in turn  to be gripped by the
pusher and stop members and subsequently released and
advanced through the compartments by pressure applied during
the insertion of a subsequent cassette.

2.    A device according to claim 1 characterised in that said
device comprises a casing which is rectangular in plan view
and in cross section, a platform spaced from the rear end of
the casing and dividing a front portion thereof into upper
and lower compartments;  a drawer slidable within the casing
and having a bottom aperture;  and a plurality of resiliently
depressable pusher members and stop members in each of said
compartments, the pusher members being carried by the drawer,
and the stop members being carried by the casing and by the
platform;  said pusher members in the upper compartment being
adapted and arranged to push casettes rearwardly along the
platform during closing movement of the drawer until they
drop into the lower compartment, and said stop members in
the upper compartment preventing movement of cassettes with
the drawer during opening mevement of the drawer;  and said
pusher members in the lower compartment being adapted and
arranged to move cassettes forwardly during opening movement
of the drawer until they are ejected through the open front
end of the lower compartment, and said stop members in the
lower compartment preventing movement of cassettes with the
drawer during closing movement of the drawer.

3.    A device according to claim 1 or claim 2 characterised
in that leaf springs are provided on the inner face of the upper wall of the casing to facilitate cassette transfer from the upper compartment to the lower compartment when the device is located in a non-horizontal position.

4. A device according to claim 1 or claim 2 or claim 3 characterised in that the resiliently depressable members are formed from spring steel.

5. A device according to claim 1 or claim 2 or claim 3 characterised in that the resiliently depressable members are formed from flexibly resilient plastics material.

0081023

# Fig.1.

# Fig.2.

*Fig.3.*

*Fig.4.*

Fig. 5.

Fig.6.

European Patent Office

**EUROPEAN SEARCH REPORT**

EP 81 30 5821.1

## DOCUMENTS CONSIDERED TO BE RELEVANT

| Category | Citation of document with indication, where appropriate, of relevant passages | Relevant to claim |
|---|---|---|
| A | <u>DE – A1 – 2 721 174</u> (H.-D. HANS)<br>* claims 4, 5; pages 4, 5 *<br>-- | |
| A | <u>DE – A1 – 2 729 492</u> (F. THEYSOHN)<br>* claims 1, 3, 6; page 7 *<br>-- | |
| A | <u>US – A – 4 191 292</u> (E.H. SCHWEIZER)<br>* page 2, lines 16 to 59 *<br>-- | |
| A | <u>DE – A1 – 2 917 806</u> (P. FLORJANCIC)<br>* claims 1, 3 *<br>---- | |

**CLASSIFICATION OF THE APPLICATION (Int. Cl. $^3$)**

G 11 B 23/02

**TECHNICAL FIELDS SEARCHED (Int.Cl. $^3$)**

B 65 D 85/672

G 11 B 1/02

G 11 B 23/02

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 05-07-1982 | LEITHÄUSER |

EPO Form 1503.1   06.78